# EUROPEAN PATENT APPLICATION

(11) **EP 3 048 616 A1**
(43) Date of publication of application: **27.07.2016**
(21) Application number: 14846651.9
(22) Date of filing: 15.07.2014
(51) Int. Cl.: H01B 7/295, C08K 5/04, C08K 5/5313, C08L 67/02, H01B 3/30, H01B 3/42, H01B 7/02, H01B 17/58

(54) **HALOGEN-FREE, FLAME-RETARDANT INSULATING ELECTRICAL WIRE AND FLAME-RETARDANT INSULATING TUBE**

(30) Priority: 19.09.2013 JP 2013194030
(71) Applicant: Sumitomo Electric Industries, Ltd., Osaka-shi, Osaka 541-0041 (JP)
(72) Inventor: FUJITA, Taro, Osaka-shi Osaka 554-0024 (JP); NISHIKAWA, Shinya, Osaka-shi Osaka 554-0024 (JP); HAYAMI, Hiroshi, Osaka-shi Osaka 554-0024 (JP); AOKI, Kazuhira, Osaka-shi Osaka 554-0024 (JP); OCHI, Yuji, Kanuma-shi Tochigi 322-8585 (JP); HORI, Kenji, Kanuma-shi Tochigi 322-8585 (JP)
(74) Representative: Boult Wade Tennant
(86) International application number: PCT/JP2014/068775
(87) International publication number: WO 2015/040941

(57) **Abstract**

Provided is a halogen-free flame-retardant insulating tube or a halogen-free flame-retardant insulated electric wire including an insulating coating in which insulation resistance, abrasion resistance, heat deformation resistance, and flame retardancy are highly balanced, in particular, a halogen-free flame-retardant insulated electric wire in which these properties are high balanced and which has high hot water resistance that passes a DC stability test required in the EN 50306-2 standard for railway vehicles. In an insulated electric wire including a conductor and a halogen-free insulating coating that covers the conductor or a halogen-free flame-retardant insulating tube, the insulating coating and the flame-retardant insulating tube include a layer composed of a polyester resin composition that contains 5 to 50 parts by mass of a metal phosphinate and 1 to 10 parts by mass of a polyfunctional monomer relative to a resin component of 100 parts by mass of a polyester elastomer.

## Description

### Technical Field

The present invention relates to a halogen-free flame-retardant insulated electric wire including an insulating coating (insulating layer) which does not contain a halogen and in which insulation resistance, flame retardancy, abrasion resistance, hot water resistance, heat deformation resistance, etc. are highly balanced, the halogen-free flame-retardant insulated electric wire being suitably used as, for example, a wire harness for an automobile or a railway vehicle, and to a flame-retardant insulating tube.

### Background Art

Insulated electric wires used as, for example, wire harnesses for automobiles or railway vehicles may be exposed to unfavorable conditions such as a temperature change from coldness to a high temperature, vibrations, and wind and rain, and may be exposed to heat or fire generated from a device, or the like. Therefore, insulating coatings (insulating layers) of such insulated electric wires are required to satisfy predetermined standards regarding mechanical strength, insulation resistance, hot water resistance (stability), flame retardancy, abrasion resistance, heat deformation resistance, etc. so that the insulated electric wires can be stably used even under such unfavorable conditions. Acceptance criteria are specified by, for example, the International Organization for Standardization (ISO) standards and the International Electrotechnical Commission (IEC) standards, which are international standards, and the European Norm (EN) standards, which are European standards.

As a material of a flame-retardant insulating coating, polyvinyl chloride (PVC) is known. A method for providing flame retardancy to an insulating coating by adding a halogen-based flame retardant is also known. However, recently, so-called halogen-free insulating materials, which do not contain PVC or a halogen-based flame retardant, have been desired in order to prevent environmental problems and in order that, in particular, in the application to railways, evacuation of passengers is not hampered by the emission of smoke in the case of a fire.

A known example of a halogen-free insulating material used in an insulating coating is a material obtained by adding a halogen-free flame retardant such as magnesium hydroxide, aluminum hydroxide, or a nitrogen-based flame retardant to an insulating resin such as a polyolefin resin. However, in order to satisfy flame retardancy, the halogen-free flame retardant needs to be added in a larger amount than a halogen-based flame retardant, which may easily cause problems such as a decrease in the flexibility of the insulating coating and a decrease in the initial tensile elongation and a tensile elongation after aging of the insulating coating.

A known halogen-free resin composition having good flame retardancy, good mechanical strength, good insulation resistance, and good heat deformation resistance is a flame-retardant resin composition that contains a thermoplastic resin, a polyfunctional monomer, and an organophosphorus-based flame retardant. For example, PTL 1 discloses a flame-retardant resin composition that contains a thermoplastic resin containing 5% by mass or more of a resin having a carbon-carbon unsaturated bond or a resin having a carbonyl group, a polyfunctional monomer, and a specific organophosphorus-based flame retardant, in which the contents of the polyfunctional monomer and the organophosphorus-based flame retardant are within specific ranges, and describes that the flame-retardant resin composition can be used as an insulating tube or the like.

### Citation List

### Patent Literature

PTL 1: Japanese Unexamined Patent Application Publication No. 2011-099084

### Summary of Invention

### Technical Problem

However, recently, for the purpose of energy saving, a reduction in weight has been desired for insulated electric wires for wire harnesses for automobiles or railway vehicles. Therefore, a reduction in wall thickness has also been desired for insulating coating used in the insulated electric wires. For example, regarding signal lines for railway vehicles, a thickness of an insulating coating of 0.25 mm or less is required. Even when the insulating coating has such a small wall thickness, mechanical strength, insulation resistance, flame retardancy, abrasion resistance, heat deformation resistance, etc. that are equivalent to those of existing insulating coatings are required. Furthermore, for signal lines for railway vehicles, hot water resistance (property that insulation performance is not decreased by storage in hot water) that passes a standard such as the EN 50306-2 standard is required. However, it is difficult for existing halogen-free flame-retardant resin compositions to provide an insulating coating which has a small wall thickness and in which these required properties are highly balanced.

It is an object of the present invention to provide a halogen-free flame-retardant insulated electric wire in which insulation resistance, abrasion resistance, heat deformation resistance, etc. are highly balanced and which has flame retardancy satisfying an international standard, even when an insulating coating of the insulated electric wire has a small wall thickness.

In addition, it is an object of the present invention to provide a halogen-free flame-retardant insulated electric wire in which insulation resistance, abrasion resistance, heat deformation resistance, etc. are highly balanced, and flame retardancy satisfies an international standard, and which has good hot water resistance and passes a DC stability test required in the EN 50306-2 standard for railway vehicles, even when an insulating coating of the insulated electric wire has a small wall thickness.

Furthermore, it is an object of the present invention to provide a halogen-free flame-retardant insulating tube in which insulation resistance, abrasion resistance, heat deformation resistance, etc. are highly balanced and which has flame retardancy satisfying an international standard, even when the insulating tube has a small wall thickness. Solution to Problem

A first embodiment of the present invention is
a halogen-free flame-retardant insulated electric wire including a conductor and a halogen-free insulating layer that covers the conductor either directly or with another layer therebetween, in which the insulating layer is composed of a cross-linked product of a polyester resin composition that contains 100 parts by mass of a polyester resin, 5 to 50 parts by mass of a metal phosphinate, and 1 to 10 parts by mass of a polyfunctional monomer.

A second embodiment of the present invention is
a halogen-free flame-retardant insulated electric wire including a conductor and a halogen-free insulating coating that covers the conductor, in which the insulating coating includes
an outer layer composed of a cross-linked product of a polyester resin composition that contains 100 parts by mass of a polyester resin, 5 to 50 parts by mass of a metal phosphinate, and 1 to 10 parts by mass of a polyfunctional monomer and an inner layer composed of a cross-linked polyethylene, and
a thickness of the inner layer is 0.02 mm or more and a thickness of the outer layer is 0.10 mm or more.

A third embodiment of the present invention is
a halogen-free flame-retardant insulating tube composed of a cross-linked product of a polyester resin composition that contains 100 parts by mass of a polyester resin, 5 to 50 parts by mass of a metal phosphinate, and 1 to 10 parts by mass of a polyfunctional monomer.

### Advantageous Effects of Invention

The halogen-free flame-retardant insulated electric wire according to the first embodiment of the present invention is an insulated electric wire which includes a halogen-free insulating layer (insulating coating), in which insulation resistance, abrasion resistance, and heat deformation resistance are highly balanced, and which has sufficient flame retardancy that passes flame tests required in the ISO and IEC standards, even when the insulating layer (insulating coating) has a small wall thickness.

The halogen-free flame-retardant insulated electric wire according to the second embodiment of the present invention is an insulated electric wire which includes a halogen-free insulating coating, which has sufficient flame retardancy that passes flame tests required in the ISO and IEC standards and has high hot water resistance that passes a DC stability test required in the EN 50306-2 standard, and in which insulation resistance, abrasion resistance, and heat deformation resistance are highly balanced, even when the insulating coating has a small wall thickness. Accordingly, the halogen-free flame-retardant insulated electric wire can be suitably used as an electric wire used in a high-temperature environment, for example, wiring in the engine room of automobiles and wiring in railway vehicles.

The halogen-free flame-retardant insulating tube according to the third embodiment of the present invention can have highly balanced insulation resistance, abrasion resistance, and heat deformation resistance, and has sufficient flame retardancy that passes flame tests required in the ISO and IEC standards, even when the insulating tube has a small wall thickness.

### Brief Description of Drawings

[Fig. 1] Figure 1 includes schematic perspective views showing a device for measuring a conductor drawing force.
[Fig. 2] Figure 2 includes schematic perspective views showing a device for measuring an inner layer drawing force.

### Description of Embodiments

Embodiments for carrying out the present invention will now be described. However, the scope of the present invention is not limited to the embodiments, and various modifications can be made as long as the objects of the present invention are not impaired.

A first embodiment of the present invention is
a halogen-free flame-retardant insulated electric wire including a conductor and a halogen-free insulating layer that covers the conductor either directly or with another layer therebetween, in which the insulating layer is composed of a cross-linked product of a polyester resin composition that contains 100 parts by mass of a polyester resin, 5 to 50 parts by mass of a metal phosphinate, and 1 to 10 parts by mass of a polyfunctional monomer.

The inventor of the present invention found that an insulating layer in which insulation resistance, abrasion resistance, and heat deformation resistance can be highly balanced, and which has sufficient flame retardancy that passes flame tests required in the ISO and IEC standards is obtained by forming the insulating layer by using a polyester resin composition that contains 100 parts by mass of a polyester resin, 5 to 50 parts by mass of a metal phosphinate, and 1 to 10 parts by mass of a polyfunctional monomer, and by cross-linking the polyester resin. This finding resulted in the completion of the first embodiment of the present invention.

A second embodiment of the present invention is
a halogen-free flame-retardant insulated electric wire including a conductor and a halogen-free insulating coating that covers the conductor,
in which the insulating coating includes
an outer layer composed of a cross-linked product of a polyester resin composition that contains 100 parts by mass of a polyester resin, 5 to 50 parts by mass of a metal phosphinate, and 1 to 10 parts by mass of a polyfunctional monomer and an inner layer composed of a cross-linked polyethylene, and
a thickness of the inner layer is 0.02 mm or more and a thickness of the outer layer is 0.10 mm or more.

As a result of intensive studies, the inventor of the present invention found that a halogen-free flame-retardant insulated electric wire which has sufficient flame retardancy that passes flame tests required in the ISO and IEC standards, and good hot water resistance that passes a DC stability test required in the EN 50306-2 standard, and in which insulation resistance, abrasion resistance, and heat deformation resistance can be highly balanced is obtained by
adopting an insulated electric wire that includes an insulating coating having a two-layer (or multilayer) structure,
forming the outer layer side (the side opposite to the conductor) as in the insulating layer of the insulated electric wire of the first embodiment, and
forming the inner layer side (the conductor side) by using a cross-linked polyethylene. This finding resulted in the completion of the present invention.

Polyester resins are polycondensates of a diol and a dicarboxylic acid such as terephthalic acid or 1,6-naphthalene dicarboxylic acid. The polyester resins used in the production of the insulated electric wire of the first embodiment or the second embodiment cover modified products of polyester resins, for example, polyester elastomers in which a component that provides elasticity is copolymerized with a polyester resin.

Among such polyester resins, polybutylene terephthalate (PBT), polybutylene naphthalate (PBN), and modified products thereof are preferable because these polyester resins are tough and have good electrical insulation properties and relatively low water-absorbing properties, and a change in the electrical insulation properties of the polyester resins is small. Accordingly, as a more preferred embodiment of the present invention, there is also provided the halogen-free flame-retardant insulated electric wire according to the first embodiment or the second embodiment, in which the polyester resin is PBT, PBN, or a modified product thereof.

Among PBT, PBN, and modified products thereof, copolymers of PBT and one or more selected from isophthalic acid, polycaprolactone, polycarbonate, and polyether are more preferable because these copolymers are excellent in terms of impact resistance, flexibility, and low-temperature property. Accordingly, as a still more preferred embodiment of the present invention, there is also provided the halogen-free flame-retardant insulated electric wire according to the first embodiment or the second embodiment, in which the polyester resin is a copolymer of PBT and one or more selected from isophthalic acid, polycaprolactone, polycarbonate, and polyether.

The metal phosphinate used in the production of the insulated electric wire of the first embodiment or the second embodiment is a compound represented by a formula (1) below.

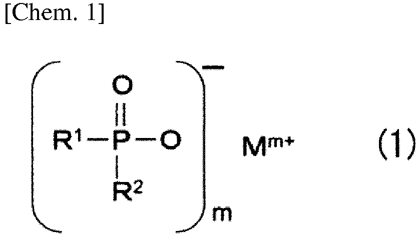

In the formula, R¹ and R² each represent an alkyl group having 1 to 6 carbon atoms or an aryl group having 12 or less carbon atoms, M represents calcium, aluminum, or zinc, when M represents aluminum, m = 3, and when M represents calcium or zinc, m = 2. Examples of the metal phosphinate that can be used include aluminum salts of an organic phosphinic acid, such as EXOLIT OP1230, EXOLIT OP1240, EXOLIT OP930, and EXOLIT OP935, all of which are manufactured by Clariant K.K.; and blended products of an aluminum salt of an organic phosphinic acid and melamine polyphosphate.

The content of the metal phosphinate is 5 to 50 parts by mass relative to 100 parts by mass of the polyester resin. When the content of the metal phosphinate is less than 5 parts by mass, flame retardancy of the insulating layer is insufficient, and flame retardancy that passes the test for vertical flame propagation for a single insulated wire specified in IEC 60332-1 may not be obtained. When the content of the metal phosphinate exceeds 50 parts by mass, hot water resistance decreases and the DC stability test required in the EN 50306-2 standard may not be passed.

The polyfunctional monomer used in the production of the insulated electric wire of the first embodiment or the second embodiment functions as a cross-linking aid when the polyester resin is cross-linked by irradiation with ionizing radiation. A polyfunctional monomer having a plurality of carbon-carbon double bonds in its molecule, such as trimethylolpropane trimethacrylate, triallyl cyanurate, or triallyl isocyanurate, is preferably used as the polyfunctional monomer. The polyfunctional monomer is preferably liquid at room temperature. In particular, trimethylolpropane trimethacrylate is preferable because this monomer has high compatibility with the polyester resin composition.

The content of the polyfunctional monomer is 1 to 10 parts by mass relative to 100 parts by mass of the polyester resin. When the content of the polyfunctional monomer is less than 1 part by mass, a cross-linking efficiency is low and abrasion resistance, heat deformation resistance, etc. of the insulating layer decrease. When the content of the polyfunctional monomer exceeds 10% by mass, the modulus of elasticity significantly increases after the polyester resin is cross-linked, and workability when the resulting insulated electric wire is wired significantly decreases.

By incorporating such a polyfunctional monomer in an amount of 1 to 10 parts by mass relative to 100 parts by mass of the polyester resin and cross-linking the polyester resin, properties such as abrasion resistance and heat deformation resistance, etc. of the insulating layer can be sufficiently enhanced.

An example of the method for cross-linking the polyester resin is a method including irradiation with ionizing radiation. Examples of the ionizing radiation include electromagnetic waves such as y rays, X rays, and ultraviolet rays, and corpuscular rays such as α rays. From the viewpoint of the ease of control, simplicity of the use of a radiation source, the transmission thickness of the ionizing radiation, the rate of a cross-linking process, etc., electron beams are preferable.

The polyester resin composition used in the production of the insulated electric wire of the first embodiment or the second embodiment contains, as a main component, an essential component consisting of the polyester resin, the metal phosphinate, and the polyfunctional monomer. Herein, the phrase "contains as a main component" means that the polyester resin composition contains the essential component in an amount of 50% by mass or more and preferably 80% by mass or more of the polyester resin composition but may contain other components as long as the objects of the present invention are not impaired. This also applies to the description below.

Examples of the other components that can be contained together with the main component include phosphoric acid esters acting as flame retardants. In this case, phosphoric acid esters having high phosphorus contents and phosphoric acid esters having high molecular weights and high meting points are preferable because such phosphoric acid esters have a high effect of improving flame retardancy. Examples of such phosphoric acid esters include condensed phosphoric acid esters. In particular, bisphenol A bis-diphenyl phosphate is preferably used. In addition, additives such as an antioxidant, a processing aid, a color pigment, and a lubricant may be added, as required. These additives may be added alone or in combination of two or more additives.

The insulating layer (insulating coating) composed of a cross-linked product of the polyester resin composition that contains, as a main component, the polyester resin, the metal phosphinate, and the polyfunctional monomer can have highly balanced insulation resistance (at room temperature), abrasion resistance, and heat deformation resistance, and good flame retardancy. However, this insulating layer (insulating coating) does not have sufficient hot water resistance for passing the DC stability test required in the EN 50306-2 standard. Accordingly, the inventor of the present invention tried to use polyethylene having higher hot water resistance in combination. As a result, it was found that an insulating coating that exhibits sufficient hot water resistance for passing the DC stability test required in the EN 50306-2 standard is obtained without decreasing insulation resistance, abrasion resistance, heat deformation resistance, and flame retardancy by adopting an insulating coating having a two-layer structure that includes an outer layer composed of a cross-linked product of the polyester resin composition and having a thickness of 0.10 mm or more and an inner layer composed of a cross-linked product of a polyethylene and having a thickness of 0.02 mm or more. This finding resulted in the completion of the second embodiment of the present invention.

The polyethylene used for forming the inner layer may be any of low-density polyethylene, medium-density polyethylene, and high-density polyethylene, and is not particularly limited. Copolymers of polyethylene may also be used within a range where good hot water resistance is obtained. For example, as described below, a copolymer of polyethylene and glycidyl methacrylate (GMA) can be preferably used.

The polyethylene constituting the inner layer is cross-linked. By conducting cross-linking, mechanical strength, abrasion resistance, and adhesiveness between the outer layer and the inner layer of the insulating coating are improved. In particular, heat deformation resistance is improved.

The cross-linking of the polyethylene constituting the inner layer can be conducted by irradiation with ionizing radiation as in the cross-linking of the polyester resin composition constituting the insulating layer of the first embodiment or the outer layer of the second embodiment. In the formation of the insulating coating of the second embodiment, the outer layer and the inner layer may be formed by using resins before cross-linking, and the resulting insulated electric wire may then be irradiated with ionizing radiation to cross-link the resins of the outer layer and the inner layer at the same time. This method is preferable because the adhesive strength between the outer layer and the inner layer is increased by cross-linking the resins of the outer layer and the inner layer at the same time after the formation of the outer layer and the inner layer. In order to accelerate the cross-linking of the inner layer, a cross-linking aid such as the polyfunctional monomer described above may be added to the polyethylene. The above additives such as an antioxidant, a processing aid, a color pigment, and a lubricant may be added to the inner layer, as required.

The thickness of the inner layer is 0.02 mm or more. When the thickness of the inner layer is less than 0.02 mm, sufficient hot water resistance that passes the DC stability test required in the EN 50306-2 standard is not easily obtained. Furthermore, insulation resistance at a high temperature tends to decrease. As described below, the thickness of the insulating coating is preferably 0.25 mm or less in many cases. In the case where the thickness of the insulating coating is 0.25 mm or less, when the thickness of the inner layer is increased, the thickness of the outer layer needs to be decreased. When the thickness of the outer layer is decreased, flame retardancy and abrasion resistance tend to decrease. Therefore, the thickness of the inner layer is preferably 0.15 mm or less and more preferably 0.10 mm or less.

The inner layer may be constituted by using, as the polyethylene, a modified polyethylene that is obtained by performing copolymerization with GMA (hereinafter, also simply referred to as "modified polyethylene"). In this case, adhesiveness between the outer layer composed of a cross-linked product of a polyester resin and the inner layer (adhesiveness between inner and outer layers) can be improved compared with the case where a polyethylene that is not copolymerized with GMA is used. As a result, abrasion resistance can be improved. Accordingly, as a more preferred embodiment of the present invention, there is also provided the halogen-free flame-retardant insulated electric wire according to the second embodiment, in which the cross-linked polyethylene constituting the inner layer is a cross-linked product of a modified polyethylene obtained by performing copolymerization with GMA.

Regarding the modified polyethylene, a mass ratio of GMA to a total mass of ethylene and GMA that constitute the modified polyethylene is preferably 2% to 15%. When the ratio of GMA is less than 2% by mass, the effect obtained by using the modified polyethylene, that is, good adhesiveness between the inner and outer layers is not easily obtained. A ratio of GMA exceeding 15% by mass is not preferable because the adhesive strength between a conductor and an insulating coating (inner layer) becomes excessively large, and the conductor is not easily drawn out from the insulated electric wire (conductor drawing force becomes excessively large). As a result, in using the insulated electric wire, processing and the like become difficult.

The present invention further provides, as a more preferred embodiment, the halogen-free flame-retardant insulated electric wire according to the second embodiment, in which the inner layer includes two layers of a first inner layer on the outside and a second inner layer on the inside, the first inner layer is composed of a cross-linked product of a modified polyethylene obtained by performing copolymerization with GMA, the second inner layer is composed of a cross-linked product of a polyethylene that is not copolymerized with GMA (non-modified polyethylene), a thickness of the first inner layer is 0.01 mm or more, and a thickness of the second inner layer is 0.01 mm or more. Herein, the term "outside of an inner layer" means the outer layer side, and the term "inside of an inner layer" means the conductor side.

As described above, in the case where the modified polyethylene is used as the inner layer, adhesiveness with the outer layer (adhesiveness between the inner and outer layers) improves. However, on the other hand, the adhesive strength with a conductor becomes excessively large, and an excessively large force is necessary when the conductor is drawn out from the electric wire. Accordingly, the inner layer is separated into two layers of the first inner layer on the outside and the second inner layer on the inside, the first inner layer that contacts the outer layer is constituted by the modified polyethylene that provides good adhesiveness between the inner and outer layers, and the second inner layer that contacts the conductor is constituted by a non-modified polyethylene having a low adhesive strength with the conductor. With this structure, it is possible to obtain an insulated electric wire which has good adhesiveness between the inner and outer layers, and from which a conductor can be drawn out with a moderate drawing force.

The first inner layer has a thickness of 0.01 mm or more, and the second inner layer also has a thickness of 0.01 mm or more. Accordingly, in the case where the inner layer has a thickness of 0.02 mm, each of the first inner layer and the second inner layer has a thickness of 0.01 mm. When the thickness of the first inner layer is less than 0.01 mm, the adhesiveness between the inner and outer layers, the adhesiveness being the effect obtained by the modification with GMA, tends to decrease. When the thickness of the second inner layer is less than 0.01 mm, the adhesive force with the conductor cannot be sufficiently decreased, and it may be difficult to draw out the conductor with a moderate drawing force.

In each of the first embodiment and the second embodiment, the total thickness of the insulating coating (insulating layer) can be appropriately selected in accordance with the diameter of the conductor and the like. Since the insulating coating (insulating layer) of the present invention has good abrasion resistance, hot water resistance, etc., the insulating coating (insulating layer) can satisfy the required properties even when the thickness thereof is 0.25 mm or less. Therefore, the thickness of the insulating coating (insulating layer) can be 0.25 mm or less. As a result, a reduction in weight can be realized, and thus the insulating coating (insulating layer) can contribute to energy saving of railway vehicles. Furthermore, for example, wiring in a narrow part can be realized and handling of the wire may become easy. However, when the thickness of the outer layer is less than 0.10 mm, flame retardancy and abrasion resistance tend to decrease. Therefore, the thickness of the outer layer is preferably 0.10 mm or more, and more preferably 0.15 mm or more. Accordingly, the thickness of the inner layer is preferably 0.15 mm or less, and more preferably 0.10 mm or less.

Examples of the conductor included in the insulated electric wire include wires composed of copper, aluminum, or the like, which has good electrical conductivity. The conductor may be a single wire or a stranded wire including a plurality of element wires. The diameter of the conductor is preferably 1.5 mm or less.

The insulated electric wire of the first embodiment can be produced by coating a conductor with a polyester resin composition either directly or with another layer therebetween, and cross-linking the resin by, for example, irradiation with ionizing radiation. The insulated electric wire of the second embodiment can be produced by coating a conductor with a polyethylene (resin composition) of an inner layer, cross-linking the resin, subsequently coating the resulting conductor with a polyester resin composition of an outer layer, and cross-linking the resin. Alternatively, a conductor may be coated with a polyethylene (resin composition) of an inner layer, and then further coated with a polyester resin composition of an outer layer, and subsequently, the resulting conductor may be irradiated with ionizing radiation to cross-link the resins of the inner layer and the outer layer at the same time. Alternatively, a conductor may be coated with resins (resin compositions) of an inner layer and an outer layer at the same time by using a two-layer extruder, and subsequently, the resulting conductor may be irradiated with ionizing radiation to cross-link the resins of the inner layer and the outer layer at the same time.

In the case where the inner layer includes two layers of a first inner layer on the outside and a second inner layer on the inside, the insulated electric wire can be produced by, for example, coating a conductor with a resin (composition) constituting the second inner layer, then coating the resulting conductor with a resin (composition) constituting the first inner layer, subsequently coating the conductor with a resin composition constituting the outer layer, and then irradiating the conductor with ionizing radiation to cross-link the resins.

In each of the cases of the insulating layer of the first embodiment, and the outer layer and the inner layer (in the case where the inner layer includes two layers, the first inner layer and the second inner layer) of the second embodiment, the layers can be formed by using a known extruder such as a melt extruder. The polyester resin composition forming the insulating layer of the first embodiment or the outer layer of the second embodiment can be produced by mixing the constituent materials using a known melt mixer such as a single-screw extruder, a twin-screw extruder, a kneading machine, or a Banbury mixer.

A third embodiment of the present invention is a halogen-free flame-retardant insulating tube composed of a cross-linked product of a polyester resin composition that contains 100 parts by mass of a polyester resin, 5 to 50 parts by mass of a metal phosphinate, and 1 to 10 parts by mass of a polyfunctional monomer. That is, the third embodiment of the present invention is a resin tube having the same structure as the insulating layer of the insulated electric wire of the first embodiment.

Accordingly, such a halogen-free flame-retardant insulating tube can be produced by, for example, forming a layer composed of a cross-linked product of a polyester resin composition on a linear base as in the formation of the insulating layer of the first embodiment, and subsequently drawing out the linear base. The raw materials such as a polyester resin, a metal phosphinate, and a polyfunctional monomer which are used in the production of the insulating tube, and various conditions, steps, and the like for producing the insulating tube may be the same as those used in the formation of the insulating layer in the first embodiment. A conductor wire composed of copper, aluminum, or the like can be used as the linear base. However, the linear base is not limited to a conductor wire as long as the linear base is a wire on which an insulating layer can be formed.

The halogen-free flame-retardant insulating tube may be a resin tube having the same structure as the insulating coating of the insulated electric wire of the second embodiment. Such a halogen-free flame-retardant insulating tube can be produced by, for example, forming multiple resin layers on a linear base as in the formation of the insulating coating of the second embodiment, and subsequently drawing out the linear base. The raw materials, production conditions, and the like for producing the insulating tube are the same as those in the case of the formation of the insulating coating of the second embodiment.

The halogen-free flame-retardant insulating tube obtained as described above is used for, for example, protecting connecting portions of wire harnesses of automobiles, railway vehicles, and the like. A preferred range of the thickness of the halogen-free flame-retardant insulating tube varies depending on the use of the insulating tube, and is not particularly limited. In the case where the halogen-free flame-retardant insulating tube is used for connecting thin-walled signal lines for railway vehicles, the thickness of the insulating tube is preferably 0.25 mm or less as in the thin-walled insulating coating.

### EXAMPLES

### [1] Materials of polyester resin composition

Materials used in Experimental Examples (Examples and Comparative Examples) below will now be described.

### 1. Constituent materials of outer layer

### [Polyester resin]

• Polybutylene terephthalate (PBT)-isophthalic acid copolymer, melting point 170°C (manufactured by Polyplastics Co., Ltd.: DURANEX 600LP)
• PBT-polycaprolactone copolymer, melting point 200°C (manufactured by Toyobo Co., Ltd.: PELPRENE S1001)
• PBT-polycarbonate copolymer, melting point 207°C (manufactured by Toyobo Co., Ltd.: PELPRENE C2003)
• PBT-polyether copolymer, melting point 156°C (manufactured by Du Pont-Toray Co., Ltd.: HYTREL 4056)

### [Metal phosphinate]

• Manufactured by Clariant K.K.: EXOLIT OP1230

### [Lubricant]

• Ester-based lubricant (manufactured by NOF Corporation, UNISTER M-2222SL)

### [Polyfunctional monomer]

• Trimethylolpropane trimethacrylate: TMPTMA

### [Carbodiimide]

• Manufactured by Nisshinbo Chemical Inc.: CARBODILITE LA-1

### [Antioxidant]

• Hindered phenol-based antioxidant (manufactured by ADEKA Corporation: ADK STAB AO-60)

### 2. Constituent materials of first inner layer (inner layer)

### [Non-modified polyethylene]

• Linear low-density polyethylene (LLDPE) (manufactured by Japan Polyethylene Corporation: NOVATEC LL UE320)

### [Modified polyethylene]

• Ethylene-GMA copolymer, GMA 3 wt% (manufactured by Sumitomo Chemical Co., Ltd.: BONDFAST 7L) · Ethylene-GMA copolymer, GMA 12 wt% (manufactured by Sumitomo Chemical Co., Ltd.: BONDFAST E) · Ethylene-GMA copolymer, GMA 19 wt% (manufactured by Sumitomo Chemical Co., Ltd.: BONDFAST CG5004)

### [Lubricant]

• Ester-based lubricant (manufactured by NOF Corporation, UNISTER M-2222SL)

### [Antioxidant]

• Hindered phenol-based antioxidant (manufactured by ADEKA Corporation: ADK STAB AO-60)

### 3. Second inner layer

### [Non-modified polyethylene]

• LLDPE (manufactured by Japan Polyethylene Corporation: NOVATEC LL UE320)

### [Antioxidant]

• Hindered phenol-based antioxidant (manufactured by ADEKA Corporation: ADK STAB AO-60)

### [2] Preparation of insulated electric wire

### (Experimental Examples 1 to 15)

### 1. Preparation of resin composition pellets

Components for each of an outer layer and inner layers were mixed so as to have the compositions shown in Tables I to III. The components were melt-mixed by using a twin-screw mixer (45 mm φ, L/D = 42) at a cylinder temperature of 240°C and at a number of screw revolutions of 200 rpm. Each of the resulting mixtures was melt-extruded into strands. The melted strands were cooled and then cut to prepare pellets.

### 2. Preparation of insulated electric wire

In Experimental Examples 3 to 8, 14, and 15, a second inner layer was formed by extruding the resin for a second inner layer on a conductor (stranded wire including 19 tin-plated annealed copper wires TA each having a diameter of 0.254 mm φ) having a cross-sectional area of 0.96 mm² using a single-screw extruder (30 mm φ, L/D = 24) so as to have the wall thickness shown in Tables I to III. After cooling, a first inner layer was formed by extruding the resin for a first inner layer on the second inner layer using the same single-screw extruder so as to have the wall thickness shown in Tables I to III.

In Experimental Examples 1, 2, and 10 to 13, a second inner layer was not formed, and a first inner layer was formed by extruding the resin for a first inner layer on a conductor in the same manner as described above so as to have the wall thicknesses shown in Tables I to III. In Experimental Example 9, the inner layers were not formed.

In each of Experimental Examples 1 to 8 and Experimental Examples 10 to 15, an outer layer was formed on the first inner layer, which had been formed and then cooled, by extruding the resin for an outer layer using the same single-screw extruder so as to have the wall thicknesses shown in Tables I to III. In Experimental Example 9, an outer layer was formed directly on the conductor in the same manner so as to have the wall thickness shown in Table II. After cooling, the resulting conductor was irradiated with an electron beam at an acceleration voltage of 2 MeV with a dose of 120 kGy to cross-link the resins. Thus, insulated electric wires were prepared.

**[Table I]**

| | | | Experimental Example 1 | Experimental Example 2 | Experimental Example 3 | Experimental Example 4 | Experimental Example 5 |
|---|---|---|---|---|---|---|---|
| | | PBT-isophthalic acid | 100 | 100 | 100 | - | - |
| | | PBT-polycaprolactone | - | - | - | 100 | - |
| | | PBT-polycarbonate | - | - | - | - | 100 |
| | | PBT-polyether | - | - | - | - | - |
| | Outer layer | Metal phosphinate | 20 | 20 | 20 | 20 | 20 |
| | | Lubricant | 2 | 2 | 2 | 2 | 2 |
| | | Polyfunctional monomer | 5 | 5 | 5 | 5 | 5 |
| | | Carbodiimide | 1 | 1 | 1 | 1 | 1 |
| | | Antioxidant | 1 | 1 | 1 | 1 | 1 |
| | | Wall thickness (mm) | 0.195 | 0.195 | 0.145 | 0.145 | 0.145 |
| Insulating layer | | Non-modified PE (LLPDE) | - | - | - | - | - |
| | | Modified PE (GMA3%) | 100 | - | - | - | - |
| | First inner layer | Modified PE (GMA 12%) | - | 100 | 100 | 100 | 100 |
| | | Modified PE (GMA 19%) | - | - | - | - | - |
| | | Lubricant | 2 | 2 | 2 | 2 | 2 |
| | | Antioxidant | 1 | 1 | 1 | 1 | 1 |
| | | Wall thickness (mm) | 0.03 | 0.03 | 0.04 | 0.04 | 0.04 |
| | Second inner layer | Non-modified PE (LLDPE) | Not formed | Not formed | 100 | 100 | 100 |
| | | Antioxidant | | | 1 | 1 | 1 |
| | | Wall thickness (mm) | | | 0.04 | 0.04 | 0.04 |
| | Total thickness of insulating coating (mm) | | 0.225 | 0.225 | 0.225 | 0.225 | 0.225 |
| | Outer diameter of insulated electric wire (mm φ) | | 1.72 | 1.72 | 1.72 | 1.72 | 1.72 |
| Conductor | Material | | TA | TA | TA | TA | TA |
| | Number of strands (strands) | | 19 | 19 | 19 | 19 | 19 |
| | Element wire diameter (mm φ) | | 0.254 | 0.254 | 0.254 | 0.254 | 0.254 |
| | Outer diameter (mm φ) | | 1.27 | 1.27 | 1.27 | 1.27 | 1.27 |
| Dose of electron beam (kGy) | | | 120 | 120 | 120 | 120 | 120 |

**[Table II]**

| | | | Experimental Example 6 | Experimental Example 7 | Experimental Example 8 | Experimental Example 9 | Experimental Example 10 |
|---|---|---|---|---|---|---|---|
| | | PBT-isophthalic acid | - | 100 | 100 | 100 | 100 |
| | | PBT-polycaprolactone | - | - | - | - | - |
| | | PBT-polycarbonate | - | - | - | - | - |
| | | PBT-polyether | 100 | | | | |
| | Outer layer | Metal phosphinate | 20 | 6 | 40 | 20 | 20 |
| | | Lubricant | 2 | 2 | 2 | 2 | 2 |
| | | Polyfunctional monomer | 5 | 5 | 5 | 5 | 5 |
| | | Carbodiimide | 1 | 1 | 1 | 1 | 1 |
| | | Antioxidant | 1 | 1 | 1 | 1 | 1 |
| | | Wall thickness (mm) | 0.145 | 0.145 | 0.145 | 0.225 | 0.215 |
| | | Non-modified PE (LLPDE) | - | - | - | | - |
| Insulating layer | | Modified PE (GMA3%) | - | - | - | | - |
| | First inner layer | Modified PE (GMA 12%) | 100 | 100 | 100 | Not formed | 100 |
| | | Modified PE (GMA 19%) | - | - | - | | - |
| | | Lubricant | 2 | 2 | 2 | | 2 |
| | | Antioxidant | 1 | 1 | 1 | | 1 |
| | | Wall thickness (mm) | 0.04 | 0.04 | 0.04 | | 0.01 |
| | Second inner layer | Non-modified PE (LLDPE) | 100 | 100 | 100 | Not formed | Not formed |
| | | Antioxidant | 1 | 1 | 1 | | |
| | | Wall thickness (mm) | 0.04 | 0.04 | 0.04 | | |
| | Total thickness of insulating coating (insulating layer) (mm) | | 0.225 | 0.225 | 0.225 | 0.225 | 0.225 |
| | Outer diameter of insulated electric wire (mm φ) | | 1.72 | 1.72 | 1.72 | 1.72 | 1.72 |
| Conductor | Material | | TA | TA | TA | TA | TA |
| | Number of strands (strands) | | 19 | 19 | 19 | 19 | 19 |
| | Element wire diameter (mm φ) | | 0.254 | 0.254 | 0.254 | 0.254 | 0.254 |
| | Outer diameter (mm φ) | | 1.27 | 1.27 | 1.27 | 1.27 | 1.27 |
| Dose of electron beam (kGy) | | | 120 | 120 | 120 | 120 | 120 |

**[Table III]**

| | | | Experimental Example 11 | Experimental Example 12 | Experimental Example 13 | Experimental Example 14 | Experimental Example 15 |
|---|---|---|---|---|---|---|---|
| | | PBT-isophthalic acid | 100 | 100 | 100 | 100 | 100 |
| | | PBT-polycaprolactone | - | - | - | - | - |
| | | PBT-polycarbonate | - | - | - | - | - |
| | Outer layer | PBT-polyether | - | - | - | - | - |
| | | Metal phosphinate | 20 | 20 | 20 | 3 | 60 |
| | | Lubricant | 2 | 2 | 2 | 2 | 2 |
| | | Polyfunctional monomer | 5 | 5 | 5 | 5 | 5 |
| | | Carbodiimide | 1 | 1 | 1 | 1 | 1 |
| | | Antioxidant | 1 | 1 | 1 | 1 | 1 |
| | | Wall thickness (mm) | 0.075 | 0.195 | 0.195 | 0.145 | 0.145 |
| Insulating layer | | Non-modified PE (LLPDE) | - | 100 | - | - | - |
| | | Modified PE (GME 3%) | - | - | - | - | - |
| | First inner layer | Modified PE (GME 12%) | 100 | - | - | 100 | 100 |
| | | Modified PE (GME 19%) | - | - | 100 | - | - |
| | | Lubricant | 2 | 2 | 2 | 2 | 2 |
| | | Antioxidant | 1 | 1 | 1 | 1 | 1 |
| | | Wall thickness (mm) | 0.15 | 0.03 | 0.03 | 0.04 | 0.04 |
| | Second inner layer | Non-modified PE (LLDPE) | Not formed | Not formed | Not formed | 100 | 100 |
| | | Antioxidant | | | | 1 | 1 |
| | | Wall thickness (mm) | | | | 0.04 | 0.04 |
| | Total thickness of insulating coating (mm) | | 0.225 | 0.225 | 0.225 | 0.225 | 0.225 |
| | Outer diameter of insulated electric wire (mm φ) | | 1.72 | 1.72 | 1.72 | 1.72 | 1.72 |
| Conductor | Material | | TA | TA | TA | TA | TA |
| | Number of strands (strands) | | 19 | 19 | 19 | 19 | 19 |
| | Element wire diameter (mm φ) | | 0.254 | 0.254 | 0.254 | 0.254 | 0.254 |
| | Outer diameter (mm φ) | | 1.27 | 1.27 | 1.27 | 1.27 | 1.27 |
| Dose of electron beam (kGy) | | | 120 | 120 | 120 | 120 | 120 |

### 3. Evaluation of insulated electric wire

### (1) Evaluation methods

### (Measurement of insulation resistance)

Insulation resistances at 20°C and 90°C were measured by applying a voltage of 300 V in accordance with JIS C 3005. The insulation resistance at 20°C and the insulation resistance at 90°C are required to be 500 MΩ·km or more and 0.25 MΩ·km or more, respectively.

### (Current application test) [Evaluation of hot water resistance]

### 1) Hot water resistance test in accordance with ISO 6722

An insulated electric wire having a length of 25 m and wound three turns or more was immersed in a 1% saline solution at 85°C. A current was passed for seven days while applying a direct-current voltage of 48 V between the insulated electric wire and an electrode immersed in the saline solution. This current application for seven days was performed five times. In the case where the insulation resistance after the current application for a total of 35 days was 10⁹ Ω·mm or more, the insulated electric wire was evaluated as "acceptable".

### 2) DC stability test in accordance with EN 50306-2

An insulated electric wire was immersed in a 3% saline solution at 85°C. A current was passed for 10 days while applying a direct-current voltage of 300 V between the insulated electric wire and an electrode immersed in the saline solution. In the case where, after the current application for 10 days, the insulated electric wire had a withstand voltage where an alternating voltage of 2 kV could be applied for one minute, the insulated electric wire was evaluated as "acceptable".

### (Measurement of flame retardancy)

### 1) 45° inclining combustion test in accordance with ISO 6722

An insulated electric wire was tilted by 45° and brought into contact with an inner flame of a Bunsen burner for 15 seconds, and the time (sec) until the flame expired was then measured. In the case where the flame naturally expired within 70 seconds, the insulated electric wire was evaluated as "acceptable". In the case where the time exceeded 70 seconds, the insulated electric wire was evaluated as "unacceptable".

### 2) IEC 60332-1 Test for vertical flame propagation for single insulated wire (JIS C 3665-1)

An insulated electric wire was vertically held with a support member (upper support member). An inner flame of a Bunsen burner was brought into contact with the insulated electric wire at an angle of 45° for a predetermined time (time specified in JIS C 3665-1, the time varying depending on the outer diameter of the insulated electric wire). The burner was then removed so that the flame expired, and the degree of combustion of the sample was examined. In the case where a distance between a lower end of the upper support member and a point of the start of carbonization was 50 mm or more, the insulated electric wire was evaluated as "acceptable". Furthermore, in the case where the combustion spread downward to a position 540 mm or more from the lower end of the upper support member, the insulated electric wire was evaluated as "unacceptable".

### (Hot set test) [Evaluation of heat deformation resistance]

Heat deformation resistance was measured in accordance with the hot set test specified in JIS C 3660-2-1:2003.

A conductor was drawn out from an insulated electric wire to obtain a tube of an insulating coating (insulating layer). The obtained tube was hung in an oven at 200 ± 3°C, and a weight was hung on the lower end of the tube so that a load of 20 N/cm² was applied. The tube was maintained in this state for 15 minutes. After the tube was maintained in this state for 15 minutes, the length of the tube was measured to determine the ratio of the elongation of the tube due to the load relative to the length of the tube before the start of the application of the load (elongation at the time of the application of the load). Subsequently, the load was removed from the tube in the oven, and the tube was then taken out from the oven and cooled. The ratio of the elongation of the tube after cooling relative to the length of the tube before the start of the application of the load (elongation at the time of the removal of the load) was determined. In the case where the elongation at the time of the application of the load was 100% or less and the elongation at the time of the removal of the load was 25% or less, the tube was evaluated as "acceptable".

### (Measurement of abrasion resistance)

The measurement of abrasion resistance was performed in accordance with EN 50305-2002: 5.2 Abrasion resistance. A blade of a steel spring wire (piano wire) having a diameter of 0.45 mm was used, and the blade was pressed onto an insulated electric wire at a load of 7 N (20°C) and moved 10 to 20 mm. This operation was repeated with a frequency of 50 to 60 cycles per minute. The number of times of abrasion until the blade touched a conductor due to abrasion of the insulating coating (insulating layer) was determined. The number of times of abrasion required is 150 times or more.

### (Measurement of conductor drawing force)

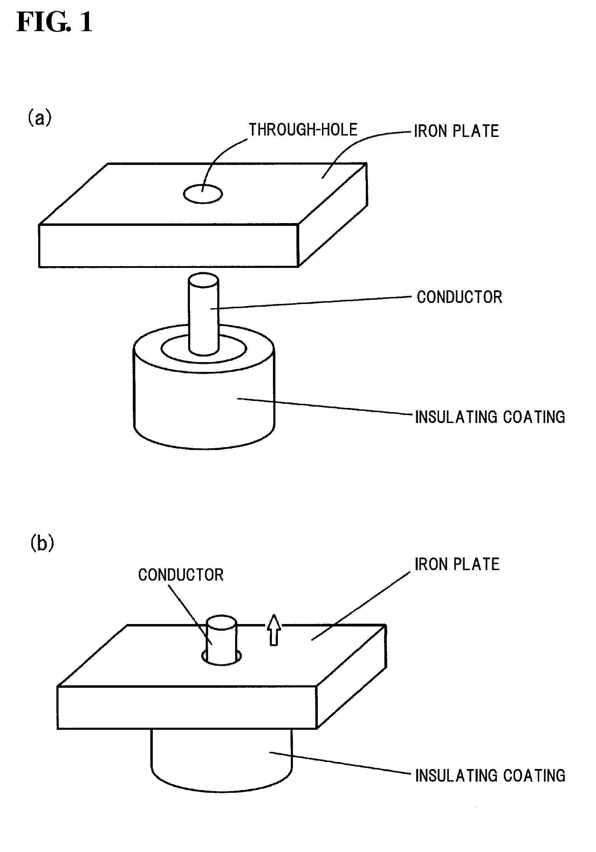

An insulated electric wire was cut, and as shown in Fig. 1(a), an insulating coating (including an inner layer and an outer layer) at an end of the cut portion of the insulated electric wire was removed so that a portion where a conductor and the insulating coating were bonded to each other had a length of 20 mm. A portion of the insulated electric wire (from which the insulating coating had been removed, that is, the conductor) was inserted into an iron plate in which a through-hole having a diameter slightly larger than the outer diameter of the conductor was formed. The conductor was drawn in the direction shown by the arrow in Fig. 1(b) while the iron plate was fixed, and a force (conductor drawing force) necessary for drawing out the conductor from the insulating coating was measured. The conductor drawing force is preferably 10 to 70 N/20 mm.

### (Measurement of inner layer drawing force) [Evaluation of adhesiveness between inner and outer layers]

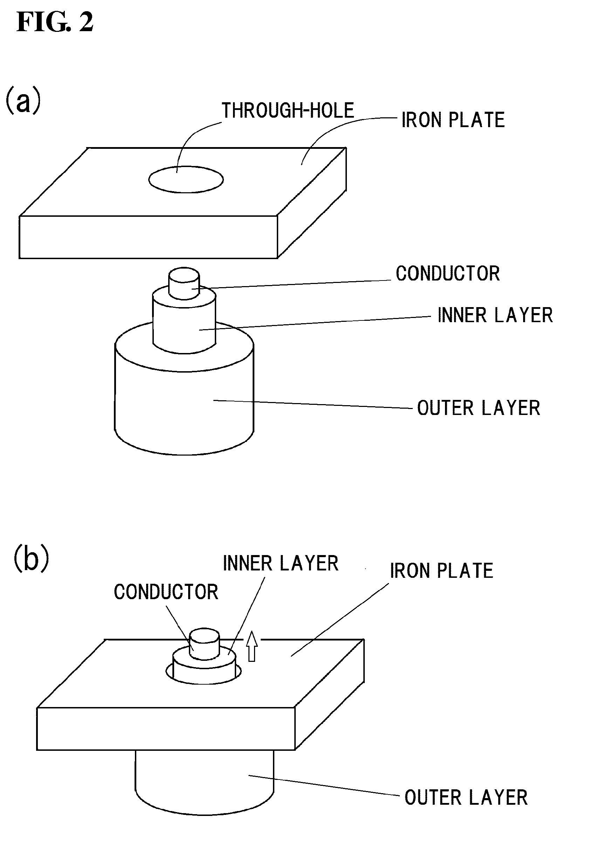

An insulated electric wire was cut, and as shown in Fig. 2(a), an outer layer at an end of the cut portion of the insulated electric wire was removed so that a portion where the outer layer and an inner layer (polyethylene layer) were bonded to each other had a length of 20 mm. A portion of the insulated electric wire (from which the outer layer had been removed) was inserted into an iron plate in which a through-hole having a diameter slightly larger than the outer diameter of the inner layer was formed. The inner layer was drawn in the direction shown by the arrow in Fig. 2(b) while the iron plate was fixed, and a force (inner layer drawing force) necessary for drawing out the inner layer from the outer layer was measured. The inner layer drawing force is preferably 10 N/20 mm or more. The larger the inner layer drawing force, the higher the adhesiveness between the inner and outer layers.

### (2) Evaluation results

Evaluation results of Experimental Examples 1 to 15 are shown in Tables IV to VI.

**[Table IV]**

| Test item | | | Experimental Example 1 | Experimental Example 2 | Experimental Example 3 | Experimental Example 4 | Experimental Example 5 |
|---|---|---|---|---|---|---|---|
| Insulation resistance (MΩ·km) | | 20°C | 3,600 | 3,200 | 1,200 | 1,300 | 1,000 |
| | | 90°C | 1.8 | 1.2 | 1.2 | 1.2 | 0.9 |
| Current application test | ISO6722 Hot water resistance test | | Acceptable | Acceptable | Acceptable | Acceptable | Acceptable |
| | EN 50306-2 DC stability test | | Acceptable | Acceptable | Acceptable | Acceptable | Acceptable |
| Flame retardancy | ISO6722 45° inclining combustion test | | Acceptable | Acceptable | Acceptable | Acceptable | Acceptable |
| | IEC 60332-1 Test for vertical flame propagation for single insulated wire | | Acceptable | Acceptable | Acceptable | Acceptable | Acceptable |
| Hot set test | | | Acceptable | Acceptable | Acceptable | Acceptable | Acceptable |
| Abrasion resistance | | | 160 | 170 | 160 | 230 | 220 |
| Conductor drawing force | | | 35 | 62 | 30 | 28 | 33 |
| Inner layer drawing force | | | 11 | 22 | 23 | 40 | 33 |

**[Table V]**

| Test item | | | Experimental Example 6 | Experimental Example 7 | Experimental Example 8 | Experimental Example 9 | Experimental Example 10 |
|---|---|---|---|---|---|---|---|
| Insulation resistance (MΩ·km) | | 20°C | 900 | 1,000 | 1,500 | 1,200 | 2,000 |
| | | 90°C | 0.9 | 1.3 | 2.4 | 0.12 | 0.35 |
| Current application test | ISO6722 Hot water resistance test | | Acceptable | Acceptable | Acceptable | Unacceptable | Acceptable |
| | EN 50306-2 DC stability test | | Acceptable | Acceptable | Acceptable | Unacceptable | Unacceptable |
| Flame retardancy | ISO6722 45° inclining combustion test | | Acceptable | Acceptable | Acceptable | Acceptable | Acceptable |
| | IEC 60332-1 Test for vertical flame propagation for single insulated wire | | Acceptable | Acceptable | Acceptable | Acceptable | Acceptable |
| Hot set test | | | Acceptable | Acceptable | Acceptable | Acceptable | Acceptable |
| Abrasion resistance | | | 165 | 240 | 160 | 180 | 175 |
| Conductor drawing force | | | 32 | 40 | 28 | 80 | 67 |
| Inner layer drawing force | | | 52 | 24 | 18 | - | 20 |

**[Table VI]**

| Test item | | | Experimental Example 11 | Experimental Example 12 | Experimental Example 13 | Experimental Example 14 | Experimental Example 15 |
|---|---|---|---|---|---|---|---|
| Insulation resistance (MΩ·km) | | 20°C | 15,000 | 4,000 | 3,000 | 800 | 2,000 |
| | | 90°C | 15 | 2.1 | 1.1 | 1.1 | 3.2 |
| Current application test | ISO6722 Hot water resistance test | | Acceptable | Acceptable | Acceptable | Acceptable | Acceptable |
| | EN 50306-2 DC stability test | | Acceptable | Acceptable | Acceptable | Acceptable | Unacceptable |
| Flame retardancy | ISO6722 45° inclining combustion test | | Acceptable | Acceptable | Acceptable | Acceptable | Acceptable |
| | IEC 60332-1 Test for vertical flame propagation for single insulated wire | | Unacceptable | Acceptable | Acceptable | Unacceptable | Acceptable |
| Hot set test | | | Acceptable | Acceptable | Acceptable | Acceptable | Acceptable |
| Abrasion resistance | | | 60 | 80 | 210 | 300 | 135 |
| Conductor drawing force | | | 65 | 20 | 82 | 35 | 31 |
| Inner layer drawing force | | | 19 | 5 | 35 | 18 | 15 |

The results shown in Tables IV to VI show the following.

The halogen-free flame-retardant insulated electric wires of Experimental Examples 1 to 8, which satisfy the constituent feature of the second embodiment of the present invention, have sufficient flame retardancy that passes the flame tests required in the ISO and IEC standards, and high hot water resistance that passes the DC stability test required in the EN 50306-2 standard. Furthermore, these halogen-free flame-retardant insulated electric wires have high insulation resistance, high abrasion resistance, and high heat deformation resistance.

In particular, the halogen-free flame-retardant insulated electric wires of Experimental Examples 2 to 8, in which a cross-linked product of a polyethylene copolymerized with 12% by mass of GMA was used as a cross-linked polyethylene constituting an inner layer, each have a large inner layer drawing force, showing that these insulated electric wires have good adhesiveness between the inner and outer layers. On the other hand, among Experimental Examples 2 to 8, in Experimental Example 2, the conductor drawing force is large whereas, in Experimental Examples 3 to 8, in which the inner layer includes a second inner layer that is not modified with GMA, the conductor drawing force is decreased.

In Experimental Example 12, in which the cross-linked polyethylene constituting the inner layer is formed of only a cross-linked product of a polyethylene that is not modified with GMA (the second inner layer is not provided), the inner layer drawing force is small and the adhesiveness between the inner and outer layers is insufficient. The abrasion resistance is also low.

On the other hand, in Experimental Example 13, in which the inner layer was formed by using only a cross-linked product of a polyethylene copolymerized with 19% by mass of GMA (the second inner layer was not provided), the conductor drawing force is excessively large. These results suggest that the copolymerization ratio of GMA is preferably in the range of 2% to 15% by mass.

The halogen-free flame-retardant insulated electric wire of Experimental Example 9, which satisfies the constituent feature of the first embodiment of the present invention, has sufficient flame retardancy that passes the flame tests required in the ISO and IEC standards, and high insulation resistance, high abrasion resistance, and high heat deformation resistance. However, hot water resistance is insufficient, and high hot water resistance that passes the hot water resistance test required in ISO 6722 and the DC stability test required in the EN 50306-2 standard is not obtained.

Also regarding the halogen-free flame-retardant insulated electric wire of Experimental Example 10, in which the insulating coating is constituted by two layers including an inner layer and an outer layer, and the thickness of the inner layer is 0.01 mm, hot water resistance is insufficient, and high hot water resistance that passes the DC stability test required in the EN 50306-2 standard is not obtained. In contrast, regarding the halogen-free flame-retardant insulated electric wire of Experimental Example 11, in which the thickness of the outer layer is 0.075 mm, the test for vertical flame propagation for a single insulated wire specified in IEC 60332-1 is not passed, and thus flame retardancy is insufficient, and abrasion resistance is also low. These results suggest that the thickness of the inner layer should be 0.02 mm or more and the thickness of the outer layer should be 0.10 mm or more.

Regarding Experimental Example 15, in which the content of the metal phosphinate in the outer layer is high, namely, 60 parts by mass, the DC stability test required in the EN 50306-2 standard is not passed and thus hot water resistance is insufficient. Regarding Experimental Example 14, in which the content of the metal phosphinate is low, namely, 3 parts by mass, the test for vertical flame propagation for a single insulated wire specified in IEC 60332-1 is not passed and thus flame retardancy is not sufficient. These results suggest that the content of the metal phosphinate in the outer layer should be in the range of 5 to 50 parts by mass relative to 100 parts by mass of the polyester resin.

## Claims

1. A halogen-free flame-retardant insulated electric wire comprising a conductor and a halogen-free insulating layer that covers the conductor either directly or with another layer therebetween, wherein the insulating layer is composed of a cross-linked product of a polyester resin composition that contains 100 parts by mass of a polyester resin, 5 to 50 parts by mass of a metal phosphinate, and 1 to 10 parts by mass of a polyfunctional monomer.

2. A halogen-free flame-retardant insulated electric wire comprising a conductor and a halogen-free insulating coating that covers the conductor, wherein the insulating coating includes an outer layer composed of a cross-linked product of a polyester resin composition that contains 5 to 50 parts by mass of a metal phosphinate and 1 to 10 parts by mass of a polyfunctional monomer relative to 100 parts by mass of a polyester resin and
an inner layer composed of a cross-linked polyethylene, and
a thickness of the inner layer is 0.02 mm or more and a thickness of the outer layer is 0.10 mm or more.

3. The halogen-free flame-retardant insulated electric wire according to Claim 2, wherein the cross-linked polyethylene constituting the inner layer is a cross-linked product of a modified polyethylene obtained by performing copolymerization with glycidyl methacrylate.

4. The halogen-free flame-retardant insulated electric wire according to Claim 3, wherein a copolymerization ratio of glycidyl methacrylate is 2% to 15% by mass.

5. The halogen-free flame-retardant insulated electric wire according to Claim 2, wherein the inner layer includes two layers of a first inner layer on the outside and a second inner layer on the inside, the first inner layer is composed of a cross-linked product of a modified polyethylene obtained by performing copolymerization with glycidyl methacrylate, the second inner layer is composed of a cross-linked product of a polyethylene that is not copolymerized with glycidyl methacrylate, a thickness of the first inner layer is 0.01 mm or more, and a thickness of the second inner layer is 0.01 mm or more.

6. The halogen-free flame-retardant insulated electric wire according to any one of Claims 1 to 5, wherein the polyester resin is polybutylene terephthalate, polybutylene naphthalate, or a modified product thereof.

7. The halogen-free flame-retardant insulated electric wire according to Claim 6, wherein the polyester resin is a copolymer of polybutylene terephthalate and one or more selected from isophthalic acid, polycaprolactone, polycarbonate, and polyether.

8. A halogen-free flame-retardant insulating tube comprising a cross-linked product of a polyester resin composition that contains 5 to 50 parts by mass of a metal phosphinate and 1 to 10 parts by mass of a polyfunctional monomer relative to 100 parts by mass of a polyester resin.
